# EUROPEAN PATENT APPLICATION

(11) **EP 1 737 159 A1**
(43) Date of publication of application: **27.12.2006**
(21) Application number: 06115637.8
(22) Date of filing: 19.06.2006
(51) Int. Cl.: H04L 12/26, B60R 16/02

(54) **Circuit arrangement of a can node**

(30) Priority: 23.06.2005 IT TO20050439
(71) Applicant: MAGNETI MARELLI SISTEMI ELETTRONICI S.p.A., 20011 Corbetta (Milano) (IT)
(72) Inventor: Timossi, Gian Maria, I-29100, Piacenza (IT)
(74) Representative: Deambrogi, Edgardo

(57) **Abstract**

What is described is a circuit arrangement of a CAN node of a motor vehicle, comprising an electronic unit (ECU) for controlling an on-board device and a module (PH) for controlling the transmission protocol over the CAN, interfaced to a bus (B) of the network. A state machine (SM) is coupled to the module (PH) for controlling the transmission protocol, and is adapted to take on a first operating configuration in which it periodically sends an automatic message comprising a status information indicating the presence of the node on the network, and a second operating configuration in which it sends messages each comprising the aforesaid status information and an operation information indicating the current operating parameters of the on-board device.

## Description

The present invention relates to CAN communication networks aboard motor vehicles, in particular the logical architecture of a CAN node and more specifically a circuit arrangement of a CAN node of the type defined in the preamble of Claim 1.

The increasing development of on-board electronics and the demand for greater safety and greater comfort in motor vehicles has led to the large-scale use of electronic units for controlling the many on-board devices, which may be control devices for driving or for functions relating to the bodywork and passenger compartment, diagnosis, communication or even entertainment.

The various on-board devices are associated with corresponding microprocessor control units connected to each other in order to exchange the data required for the execution of the various functions for which they are programmed.

In order to improve the control of communications between units, for the purpose of simplifying the electrical connections conventionally provided by means of dedicated point-to-point wiring, and limiting the number of connection terminals required in this case on the circuit boards, the multiple control units are interconnected by means of serial communication networks which use specific communication protocols.

The configuration which has become the accepted standard in the field for connections between distributed control units is denoted by the acronym CAN (Controlled Area Network). The CAN architecture is suitable for use in various areas of application: for applications of the multiplex type between on-board electronic devices for controlling bodywork and passenger compartment functions (such as, for example, the control of the headlights, seat adjustment, electric windows, rear-view mirrors, etc.); for mobile communication applications (for the purpose of integrating navigation, telephone and radio systems with a common interface in the form of a screen and control keys and/or knobs); for applications of real-time control of the vehicle dynamics (for example: engine, transmission and stability control); and for on-board diagnostic applications.

The configuration of a network of the CAN type is such that a linear transmission bus interconnects multiple control units, which thus form the nodes of the network, and which can access the bus with a priority determined by the identifier of the message contained in the arbitration field present in the frame of the transmitted signal. Such a network operates on what is called a multimaster principle. Typical data transmission rates vary from 10 kb/s to 1 Mb/s.

The frame format of a signal transmitted over a CAN is well known to those skilled in the art and will not be described here in detail. For the purpose of the present description, it is worth stating that it includes a data field which comprises a status information, indicating the status of presence of the node in the network, and at least one operation information, indicating the operating parameters of the associated on-board device. For example, for an on-board radio apparatus, the status information indicates its presence (in either an on or an off condition), while the operation information relates to the tuning frequency.

Each control unit of an on-board device interfaced with the CAN also controls the communication of data from the node over the network. Typically, a logic module for controlling the CAN communication protocol is integrated into the control unit or into an auxiliary microprocessor unit connected to it by means of a proprietary transmission protocol.

In order for the CAN to be efficient, each node in the network must respond immediately, for example within less than 50 ms, to a wake-up signal sent over the network. This value is specified in advance by motor vehicle manufacturers in order to ensure the reliability of the network and the correct control of the information relating to the configuration of the vehicle's on-board devices.

When a wake-up condition appears, for example as a result of a request for access to the vehicle or of the electrical power supply distribution made by inserting the starting key into the control panel, the nodes of the CAN receive a signal interrogating them as to their presence, to which they must reply simply in the affirmative.

Subsequently, after a phase of initialization of the corresponding electronic control units, data indicating the operating parameters of the associated on-board devices are exchanged.

Generally, any node of the network is woken up virtually instantaneously; since the functions of the control unit, including the function of controlling the transmissions on the CAN, are active only at the end of the initialization phase, particularly complex network nodes (for example, telematic systems), which consequently have a particularly long initialization phase, are unable to notify their woken-up condition to the master node within the requisite period of 50 ms.

Unfortunately, the conventional hardware architectures of the nodes of a CAN are unable to meet the requirements of rapid response specified by motor vehicle manufacturers, owing to the long initialization times.

The initialization phase generally includes read access to a permanent memory unit in which the initialization instructions reside, the copying of these instructions to a volatile memory, and the execution of the program code contained therein for the initialization of the operating system of the unit. Typically, this is a matter of transferring several Mbits of code via a parallel bus, requiring various combinations of milliseconds of time simply for the copying of the program code.

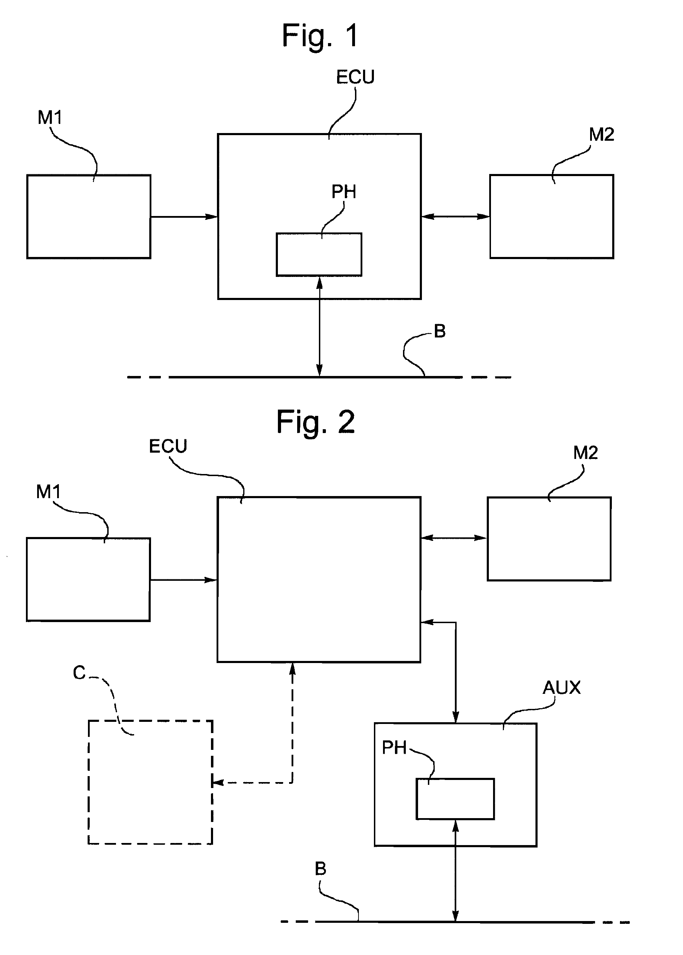

A first hardware configuration of a CAN node according to the prior art is shown in Figure 1. An electronic control unit ECU of the microprocessor type associated with an on-board device is coupled to a permanent flash memory device M1 and to a RAM volatile memory device M2. A module for controlling the CAN transmission protocol, indicated by the reference PH, adapted to control the conversion of the data made available by the ECU unit into the message formats which can be transmitted over the CAN, is integrated into the control unit and interfaced to a network bus B via a terminal of the circuit board in which the aforesaid control unit is incorporated.

The integration of the module PH into the microprocessor control unit does not enable the module PH itself to be activated until the completion of the initialization operations of the control unit, and no message can be sent over the network in this time interval. In particular, the control unit of the device cannot transmit the status message indicating its presence which is requested when it is woken up.

While the initialization phase is fairly rapid in the case of a simple node, for example one for a unit which controls a door module of the vehicle, in the case of a more complex node in which the microprocessor is assigned, for example, to the control of a navigation or entertainment device, the initialization phase is fairly long, being of the order of a second.

This behaviour clearly does not conform to the network control standards specified by motor vehicle manufacturers, these standards including, in particular, the requirement for an immediate response to wake-up. Provision has been made for the possibility of carrying out partial initialization to start the transmission of data over the CAN as soon as possible, but in a complex node even these solutions cannot meet the specifications for response times of less than 50 ms.

The known alternatives for overcoming this drawback have proved to be rather complex and, in the final analysis, costly.

An alternative solution providing a circuit arrangement for a network node is shown in Figure 2. In this solution, the module PH for controlling the CAN transmission protocol is integrated into an auxiliary microprocessor unit AUX, adapted to control only the messages sent over the CAN, and connected to the main microprocessor control unit ECU via a serial link by means of a UART module for transferring data according to a proprietary protocol.

Although this solution is efficient in terms of the speed of response over the CAN, since the activation of the module PH in the auxiliary microprocessor unit is independent of the longest initialization phase of the main control unit, it is rather costly because it requires the provision of a second microprocessor unit to be associated with the main one.

The object of the present invention is to provide a circuit arrangement of a CAN node which is simple and inexpensive, and which can be used to meet the requirement of immediate response of the node over the network, independently of the initialization times of the control unit.

According to the present invention, this object is achieved by means of an arrangement having the characteristics claimed in Claim 1.

Specific embodiments are defined in the dependent claims.

Briefly, the present invention is based on the principle of allocating the tasks of controlling the messages to be sent over the CAN to a state machine which is coupled to the module for controlling the CAN transmission protocol, which can have two operating states or conditions, namely a first operating state of periodic sending of an automatic message comprising solely a status information indicating the presence of the node on the network, and a second operating state of sending of complete messages, each comprising the said status information and at least one operation information indicating the current operating parameters of the associated on-board device.

More preferably, the invention is based on the principle of temporarily allocating the tasks of controlling communications over the CAN, during an initialization phase of the control unit, to the said state machine, which, in the aforesaid first operating state, is arranged to periodically generate in an autonomous way the said automatic message comprising the status information indicating the presence of the node on the network, and which, in the second operating state, is designed to transmit the messages generated by the control unit towards the CAN, operating in a substantially transparent ("pass-through") mode with respect to the messages generated by the control unit.

Further characteristics and advantages of the invention will be revealed more fully in the following detailed description, provided by way of example and without restrictive intent, with reference to the attached drawings, in which:
Figures 1 and 2 show, in a schematic way, logical architectures of a CAN node according to the prior art;
Figure 3 shows, schematically, a first embodiment of a circuit arrangement of a CAN node according to the invention; and
Figure 4 shows, schematically, a second embodiment of a circuit arrangement of a CAN node according to the invention.

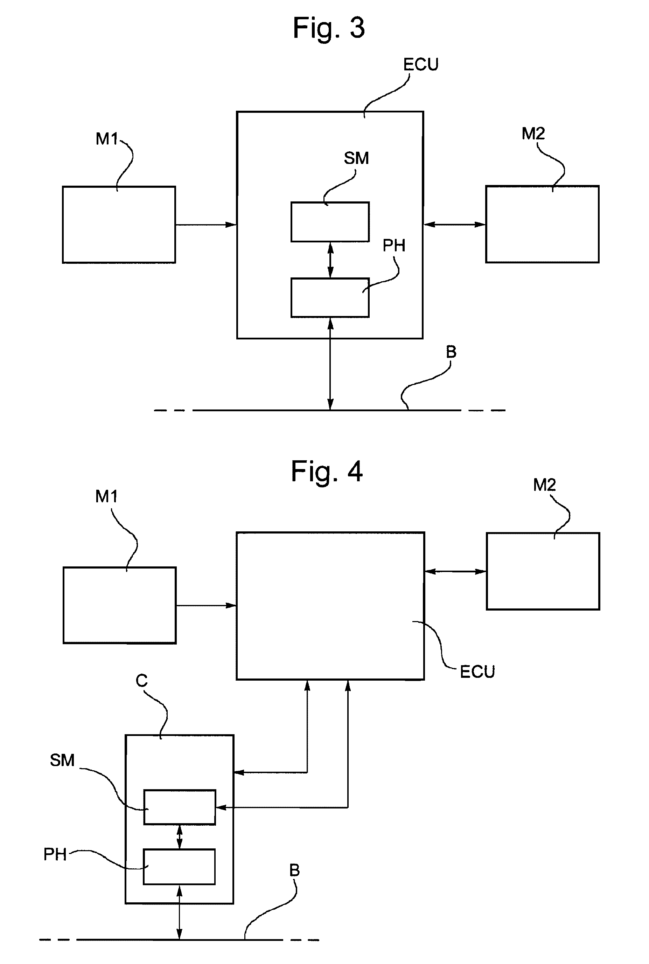

With reference to Figures 3 and 4, these show two embodiments of logical architectures of a CAN node based on the principle of the invention, which represent developments of the prior art solutions mentioned in the introductory part of this description, in which elements or components identical or functionally equivalent to those described previously are indicated by the same references.

A CAN node according to the invention includes a microprocessor control unit ECU associated with an on-board device (not shown), directly or indirectly connected to the CAN for the communication of status and operation information of the node over the network. A module PH for controlling the CAN communication protocol is interfaced to the network bus B, and is coupled to a state machine SM.

Preferably, the assembly consisting of the module PH and the state machine SM can be integrated into the control unit or into an additional circuit module C, such as a supplementary logic circuit or a multi-function custom integrated circuit, for example a voltage regulator, a "watchdog" monitoring device or the like, provided in association with the on-board device.

Figure 3 shows a development of the prior art solution of Figure 1, in which there is only one main microprocessor control unit ECU into which the state machine SM is integrated, in addition to the module PH for controlling the transmission over the CAN.

Figure 4 shows the development of the prior art solution illustrated in Figure 2, in which the main microprocessor control unit ECU is connected to an additional circuit module C. The main control unit ECU does not initially incorporate the module PH for controlling the CAN communication protocol. The assembly consisting of the module PH and the state machine SM is integrated into the additional circuit module, enabling an auxiliary microprocessor unit to be dispensed with.

If the additional circuit module C is a supplementary logic circuit, the data generated by the main control unit ECU for transmission over the CAN are transferred to the module PH for controlling the CAN protocol, via the connection bus present between the supplementary logic circuit and the control unit.

On the other hand, if the assembly consisting of the module PH and the state machine SM is incorporated into an on-board multi-function integrated circuit, then since the connection between this and the main control unit is arranged for the transmission of control signals, such as interrupt and reset signals, or supply signals, the previously existing configuration must be supplemented with a parallel bus, or with a serial peripheral interface (SPI) for transmitting the data intended for the CAN.

Alternatively, the state machine can be integrated into the main control unit and the module for controlling the CAN communication protocol can be provided in the additional circuit module.

The state machine is arranged to supervise the module PH for controlling the transmissions over the CAN during the initialization phase of the control unit ECU, in the course of which the machine is autonomous and commands the module PH to periodically send a status message over the CAN, comprising solely a status information indicating the presence of the node on the network.

Subsequently, at the end of the initialization phase of the control unit, this unit preferably takes direct control of the module PH for controlling the transmissions over the CAN via a connection path passing through the state machine which operates, in this second phase, in a way which is entirely transparent to the signals output by the control unit.

Advantageously, the architectural solutions shown by way of example in Figures 3 and 4 make it possible to economize on the use of a microprocessor unit with a CAN interface, while meeting the specifications of immediate response of the node on the network, since they make this response independent of the initialization times of the main control unit.

For example, in the case of an on-board radio apparatus, the state machine transmits over the CAN a status message indicating the presence of the node on the network, in the condition in which the apparatus is switched off and in the condition in which it is switched on, but the control unit is executing its own initialization phase. It is only at the end of the initialization phase that the control unit takes direct control of the module PH for controlling the transmissions over the CAN, and sends a signal which also includes the operation information, in this example the current tuning frequency.

Clearly, provided that the principle of the invention is retained, the forms of embodiment and the details of construction can be varied widely from what has been described and illustrated purely by way of example and without restrictive intent, without departure from the scope of protection of the present invention as defined by the appended claims.

## Claims

1. Circuit arrangement of a CAN node of a motor vehicle, comprising an electronic control unit (ECU) for controlling an on-board device, and a module (PH) for controlling the transmission protocol on the CAN interfaced to a bus (B) of the network, adapted to transmit over the network a message comprising a status information, indicating the status of presence of the node on the network, and an operation information indicating operating parameters of the associated on-board device, according to a predetermined transmission protocol,
**characterized in that** it comprises a state machine (SM) which is coupled to the said module (PH) for controlling the transmission protocol, and which is adapted to take on a first operating configuration in which it periodically sends an automatic message comprising a status information indicating the presence of the node on the network, and a second operating configuration in which it sends messages each comprising the said status information and an operation information indicating the current operating parameters of the on-board device.

2. Device according to Claim 1, in which the said state machine (SM) is adapted to take on a first temporary operating configuration in which it periodically generates an automatic message comprising a status information indicating the presence of the node on the network, during an initialization phase of the control unit (ECU), and a second operating configuration in which it transmits messages generated by the control unit (ECU), each comprising the said status information and an operation information indicating the current operating parameters of the on-board device.

3. Device according to Claim 1 or 2, in which the assembly consisting of the said module (PH) for controlling the transmission protocol and the said state machine (SM) is integrated into the control unit (ECU).

4. Device according to Claim 1 or 2, in which the assembly consisting of the said module (PH) for controlling the transmission protocol and the said state machine (SM) is integrated into an additional circuit module (C) coupled to the control unit (ECU).

5. Device according to Claim 4, in which the said additional circuit module (C) comprises a supplementary logic circuit.

6. Device according to Claim 4, in which the said additional circuit module (C) comprises a multi-function integrated circuit.
